# EUROPÄISCHE PATENTSCHRIFT

(11) **EP 0 303 074 B1**
(45) Veröffentlichungstag und Bekanntmachung des Hinweises auf die Patenterteilung: **23.03.1994**
(21) Anmeldenummer: 88111655.2
(22) Anmeldetag: 20.07.1988
(51) Int. Cl.: B23K 26/00, B21C 37/26

(54) **Verfahren und Vorrichtung zur Herstellung von Wärmetauscherrohren**
Method and apparatus for making heat exchanger tubes
Procédé et appareil de fabrication de tubes d'échangeurs de chaleur

(30) Priorität: 11.08.1987 DE 3726677
(43) Veröffentlichungstag der Anmeldung: 15.02.1989
(73) Patentinhaber: KM - SCHMÖLE GmbH, D-58706 Menden (DE)
(72) Erfinder: Schmidt, Martin, Dipl.-Phys., D-5758 Fröndenberg (DE); Mayr, Karl-Heinz, D-5750 Menden 2 (DE); Fobbe, Fritz, D-5750 Menden 2 (DE)
(74) Vertreter: Stenger, Watzke & Ring Patentanwälte

(56) Entgegenhaltungen:
- EP-A- 0 129 962
- DE-A- 3 508 878
- DE-C- 3 630 440
- GB-A- 1 359 149

## Beschreibung

Die Erfindung betrifft ein Verfahren und eine Vorrichtung zur Herstellung von Wärmetauscherrohren aus Metall mit durch Rippen vergrößerter Wärmetauschfläche, wobei ein sich drehendes Rohr auf seiner Außenfläche wendelförmig mit die Rippen bildendem Band bewickelt wird, das unter Zugkraft der Rohroberfläche zugeführt und dessen Unterkante mit dem Rohr verschweißt wird.

Es ist eine Mehrzahl von Verfahren und Vorrichtungen zur Herstellung von berippten Wärmetauscherrohren bekannt. Diesen Verfahren und Vorrichtungen ist gemeinsam, daß von einer Vorratsrolle abgewickeltes Band hochkant stehend auf die Außenfläche des sich drehenden Rohres aufgewickelt wird. Die DE-OS 21 47 079 offenbart ein derartiges Verfahren, bei dem zunächst das Rohr mit dem Band bewickelt wird, woraufhin das aufgewickelte Band mit einem Schweißbrenner festgeschweißt wird. Dieses Verfahren hat jedoch den Nachteil, daß beim Schweißen viel Wärmeenergie eingebracht wird, wodurch Verspannungen entstehen und die Wärmetauscherrohre farbig anlaufen. Zudem ist die Schweißnaht bei dem vorbekannten Verfahren unsymmetrisch und relativ groß, weil die Wärmeenergie von einer Seite des Bandes durch das Band und durch die Rohrwand zur Schweißfuge transportiert werden muß. Eine die Bandunterkante vollständig mit der Rohroberfläche verschweißende Schweißnaht greift deshalb tief in das Band und die Rohrwand ein und mindert die Festigkeitswerte des Wärmetauscherrohres und kann bei Legierungen zu Seigerungen führen. Diese Probleme treten sowohl beim Hochfrequenzschweißen mittels eines hochfrequenten elektrischen Stromes, als auch beim elektrischen Widerstandschweißen auf.

Bei den bekannten Verfahren ist außerdem nachteilig, daß das Band einer von der Bandunterkante zur Bandaußenkante zunehmenden plastischen Verformung unterworfen wird. Hierbei muß darauf geachtet werden, daß an der Bandunterkante keine durch Stauchungen hervorgerufene, wellenförmige Verwerfungen auftreten, weil diese beim Einsatz des Wärmetauscherrohres die Ablagerungen von Schmutz und Feuchtigkeit begünstigen würden. Andererseits dürfen an der Außenkante des Bandes keine durch zu große Streckungen hervorgerufene Risse auftreten, weil diese Risse einerseits die Haltbarkeit beeinträchtigen und andererseits ebenfalls zu Schmutz- und Feuchtigkeitsablagerungen führen können, die den Wärmeaustausch vermindern. Um die Stabilität des Wendelförmig aufgewickelten Bandes auf dem Rohr zu erhöhen, ist es bekannt, das aufzuwickelnde Band an seiner Fußkante mit einem kurzen, rechtwinklig abstehenden Schenkel zu versehen, der die Aufstandfläche des Bandes auf der Rohroberfläche vergrößert. Schließlich ist aus der EP-OS 0 259 607 ein Vorschlag bekanntgeworden, nach dem das flache Band vor dem Bewickeln des Rohres durch zwei Walzrollen in einem konischen Walzspalt in Längsrichtung an der Bandaußenkante gestreckt und an der Bandunterkante gestaucht wird, so daß es beim Aufwickeln weder Verwerfungen noch Risse bildet. Bei diesem Verfahren wird die Bandunterkante in zuvor erzeugte Nuten in der Rohroberfläche eingeführt und dort verstemmt. Bei diesem aufwendigen Verfahren bilden sich zwangsläufig an der Rohroberfläche Spalte, die eine Spaltkorrosion begünstigen.

Diese bekannten Verfahren und Vorrichtungen zum Vermeiden von Verwerfungen und Rissen des Bandes haben insgesamt den Nachteil, daß einerseits ein großer konstruktiver Aufwand für die Festlegung des Bandes auf der Rohroberfläche betrieben werden muß und daß andererseits hierdurch die Geschwindigkeit für das Aufwickeln des Bandes auf der Außenfläche des Rohres begrenzt wird, so daß sich insgesamt hohe Kosten für die Herstellung derartiger Wärmetauscherrohre ergeben.

Ferner ist aus der US-A-4 102 027 ein Verfahren bekannt, um U-förmige Rippen auf ein Rohr aufzuwickeln und an diesem mittels Klebstoff zu befestigen. Der Klebstoff wird dabei so auf die Rippe-Rohr-Einheit aufgesprüht, daß kein Klebstoff auf die Metall-zu-Metallkontaktfläche zwischen Rippenbasis und Rohr gelangt. Dieses Verfahren hat jedoch den Nachteil, daß diese Rippenrohre nur in niedrigen Temperaturbereichen einsetzbar sind, da sonst der Klebstoff wieder erweicht.

Schließlich ist aus der EP-A-0 129 962 ein Verfahren zum Verschweißen von Metallplatten mittels eines Laserstrahls bekannt. Dieses Verfahren ist geeignet, um Metallplatten einer Dicke von wenigstens 3 mm dadurch zu verschweißen, daß ein Laserstrahl mit einer großen Eindringtiefe das Material von einer Seite ausbrennt, um eine die gesamte Breite abdeckende Schweißverbindung zu gewährleisten. Dieses Verfahren ist somit nicht geeignet, um eine dünne Metallrippe mit einem Rohr zu verschweißen. Darüber hinaus weist eine nach diesem Verfahren ausgebildete Schweißtnaht eine große Aufschmelzzone mit einer ungleichmäßigen Gefügeausbildung auf.

Der Erfindung liegt die Aufgabe zugrunde, ein Verfahren und eine Vorrichtung zu Herstellung von Wärmetauscherrohren der eingangs beschriebenen Art zu schaffen, mit denen ein Verschweißen beliebiger metallischer Werkstoffe in Rohr und Band mit kleineren Aufschmelzzonen und unter nur geringer Wärmeeinbringung ohne Beeinträchtigung der Wickelgeschwindigkeit möglich ist.

Die Lösung dieser Aufgabenstellung durch das erfindungsgemäße Verfahren ist dadurch gekennzeichnet, daß die wendelförmig auf der Rohroberfläche verlaufende Kontaktfläche zwischen Rohr und Bandunterkante ausschließlich an der Rohroberfläche durch einen Laserstrahl aufgeschmolzen wird, der im Bereich der Auflaufstelle des Bandes auf die Rohroberfläche gerichtet ist und eine Fläche der Rohroberfläche aufschmilzt, die in axialer Richtung des Rohres mindestens der Breite der Bandunterkante und in Umfangsrichtung des Rohres etwa diesem Betrag entspricht, daß durch diesen Laserstrahl zugleich die Unterkante des zulaufenden Bandes ausschließlich im Bereich der Auflaufstelle angeschmolzen wird, daß die beiden auf- bzw. angeschmolzenen Flächenbereiche einerseits auf der Rohroherfläche und andererseits an der Bandunterkante infolge der auf das zulaufende Band ausgeübten Zugkraft beim Auflaufen des Bandes auf das Rohr spaltfrei zusammengeführt und beim anschließenden Erkalten derart miteinander verbunden werden, daß sich eine kontinuierliche, restspaltfreie Verschweißung des wendelförmig aufgewickelten Bandes mit dem Rohr ergibt und daß der Laserstrahl unter einem spitzen Winkel zur Drehachse des Rohres im Bereich der Auflaufstelle des Bandes auf die Rohroberfläche gerichtet wird.

Bei dem erfindungsgemäßen Verfahren ist also der Laserstrahl im Bereich der Auflaufstelle des Bandes auf die Rohroberfläche gerichtet, so daß infolge seiner endlichen Abmessungen in Umfangsrichtung des Rohres ein zwischen Band und Rohroberfläche ausgebildeter Spalt erfasst wird. Dabei kann der auf die Rohoberfläche gerichtete Laserstrahl sowohl durch einen in das Band eingeschmolzenen Kanal in den Spalt gelangen, als auch direkt auf eine seitliche Spaltöffnung des Spaltes gerichtet sein. Innerhalb des Spaltes kommt es durch Reflektion und Absorption an der Rohroberfläche bzw. der Bandunterkante zu einer gleichmäßigen Wärmeeinbringung, so daß eine etwa symmetrische Schweißnaht entsteht. Besonders vorteilhaft ist es, wenn hierbei der Laserstrahl unter einem spitzen Winkel zur Drehachse des Rohres im Bereich der Auflaufstelle des Bandes auf die Rohroberfläche gerichtet wird, weil dann der überwiegende Anteil des eingefallenen Laserstrahls vom Rohr zum Band reflektiert wird. Bei einem Winkel des Laserstrahles zur Drehachse des Rohres von etwa 15 bis 25° ist das Verhältnis von Reflektion und Absorption zwischen Rohr und Band besonders günstig, wobei auch eine Strahlführung und Fokussierung für den Laserstrahl in ausreichendem Abstand vom Rohr untergebracht werden kann.

Das erfindungsgemäße Verfahren hat außerdem den Vorteil, daß bei der Herstellung von Wärmetauscherrohren metallische Materialien erstmals werkstoffunabhängig und wirtschaftlich miteinander verschweißt werden. Da die aufgeschmolzene Zone sowohl in der Rohroberfläche als auch an der Bandunterkante kleinflächig ist und nicht in die Tiefe geht, wird beim erfindungsgemäßen Verfahren aufgrund des reinen Oberflächeneffekts eine Gefügeänderung und eine Materialversprüdung verhindert, was insbesondere im Hinblick auf die teilweise mit sehr hohen Drücken belasteten Rohre von Bedeutung ist. Die Festigkeitseigenschaften des Rohres werden also durch die kleine Aufschmelzzone praktisch nicht beeinträchtigt. Eine weitere Folge der geringen Wärmeeinbringung ist, daß die erfindungsgemäß hergestellten Wärmetauscherrohre praktisch keine Anlauffarben haben.

Schließlich hat das erfindungsgemäße Verfahran den Vorteil, daß das Rohr und die Bandunterkante ohne Zusatz miteinander verschweißt werden; hierdurch wird jegliche Kontaktkorrosion vernieden, da es nicht zur Elementbildung innerhalb der elektrochemischen Spannungsreihe kommen kann. Da beim erfindungsgemäßen Verfahren die Bildung von Spalten zwischen Bandunterkante und Rohroberfläche ausgeschlossen ist, wird einerseits jegliche Spaltkorrosion mit Sicherheit vermieden und andererseits aufgrund der innigen Verbindung von Rohr und Band eine sehr gute Wärmeleitfähigkeit erzielt, die insbesondere zur Erhöhung des Rippenwirkungsgrades und damit zu einer größeren Wärmeübertragungsleistung führt.

Bei einer bevorzugten Ausgestaltung der Erfindung ist vorgesehen, daß der Laserstrahl im Bereich der Auflaufstelle des Bandes direkt in eine Spaltöffnung eines Spaltes zwischen Band und Rohr bzw. direkt auf die Rohroberfläche neben der Spaltöffnung gerichtet wird, so daß die Energie des Laserstrahls durch Reflektion und Absorption an der den Spalt begrenzenden Rohroberfläche bzw. Bandunterkante ohne besondere Verluste den zu verschweißenden Stellen von Band und Rohr zugeführt wird. Dagegen wird Laserleistung unnötig verbraucht, wenn der Laserstrahl durch einen in die Wand des Bandes eingeschmolzenen Kanal an die Fügestelle zwischen Band und Rohr gelangt. Bei einer weiteren Ausgestaltung wird der Laserstrahl linear polarisiert und wird die p-Komponente des Laserstrahles im Bereich der Auflaufstelle des Bandes tangential zur Rohroberfläche und senkrecht zur Drehachse des Rohres gerichtet. Hierdurch wird erreicht, daß die Komponente des größten Reflektionsanteils des Laserstrahles zwischen Rohr und Band reflektiert werden kann, um eine gleichmäßige Wärmeeinbringung zu bewirken und einen Metalldampfkanal für die Verschweißung zu erzeugen.

Bei einer Weiterbildung des Verfahrens wird der Laserstrahl derart fokussiert, daß er sich axial auf der Rohroberfläche mindestens unter der gesamten Bandunterkante erstreckt, so daß der gesamte zu verschweißende Abschnitt der Rohroberfläche sicher aufgeschmolzen wird. Der Laserstrahl kann die Rohroberfläche über die Spaltöffnung bzw. einen in das Band eingeschmolzenen Kanal erreichen. Der Laserstrahl wird außerdem bevorzugt so fokussiert, daß er mindestens die gesamte Breite der Bandunterkante erfasst, so daß auch ein vollständiges Aufschmelzen der Bandunterkante sichergestellt ist. Zur vollständigen und gleichmäßigen Verschweißung eines Rohres insbesondere mit dickeren Bändern hat es sich als zweckmäßig erwiesen, wenn der Laserstrahl im Bereich der Auflaufstelle des Rohres mit seiner optischen Achse auf eine Spaltöffnung gerichtet wird, die zwischen Band und Rohr auf der dem einfellenden Laserstrahl gegenüberliegenden Seite des Bandes ausgebildet ist.

Wenn der Laserstrahl eines im Ringmode TEM₀₁ betriebenen Lasers zum Verschweißen von Band und Rohr verwendet wird, kann trotz mehrerer Strahlumlenkungen und einer Fokussierung eine besonders große Leistung in die Schweißstelle eingebracht werden.

Um eine Streuung des Laserstrahles durch Verunreinigungen der Umgebungsluft und den hiermit verbundenen Leistungsverlust zu vermeiden, wird der Laserstrahl bevorzugt vor dem Verschweißen von Band und Rohr in einem Schutzgas, insbesondere in Stickstoff Geführt. Zum Abschirmen der Schweißstelle gegen Umgebungsluft wird der Bereieh der Auflaufstelle des Bandes beim Schweißen bevorzugt mit einem Schutzgas, insbesondere mit Helium oder Argon umspült. Ein Entstehen von Oxiden beim Schweißen wird hierdurch verhindert, so daß ein anschließendes Beizen der Wärmetauscherrohre entfallen kann.

Bei der Vorrichtung zur Durchführung des erfindungsgemäßen Verfahrens wird in bekannter Weise eine drehbankähnliche Einspann- und Antriebsvorrichtung für des jeweils zu bewickelnde Rohr verwendet, die mit einem von einer Leitspindel angetriebenen Schlitten ausgestattet ist, auf dem die Bandvorratsrolle sowie eine Richt- und Bremseinrichtung sowie Führungen für das Band angeordnet sind. Die erfindungsgemäße Weiterbildung dieser Vorrichtung ist dadurch gekennzeichnet, daß auf dem Schlitten mindestens eine Strahlumlenkung für den Laserstrahl angeordnet ist und daß der Laserstrahl eines ortsfest neben und/oder über der Einspann- und Antriebsvorrichtung angeordneten Lasers auf die Strahlumlenkung gerichtet ist, daß der Laserstrahl vom Laser aus parallel zur Längsachse des Rohres durch einen ortsfest neben und/oder über der drehbankahnlichen Einspann- und Antriebsvorrichtung angeordneten Führungskanal geführt, wobei der Fuhrungskanal eine bandförmige Seitenwand hat, die beidenends auf ortsfesten Wickelrollen wickelbar ist, wobei die bandförmige Seitenwand am Schlitten festgelegt ist, so daß sie beim Verfahren des Schlittens von der einen Wickelrolle ab- und auf die andere Wickelrolle aufgewickelt wird, wobei eine Strahlumlenkung des Schlittens in den Führungskanal eingreift und wobei der Laserstrahl von der Strahlumlenkung durch eine Austrittsöffnung der bandförmigen Seitenwand aus dem Führungskanal ausgekoppelt wird.

Der Führungskanal ist zunächst eine den Laserstrahl hoher Leistungsdichte abdeckende Sicherheitseinrichtung. Außerdem verhindert der Führungskanal eine nachteilige Streuung des Laserstrahles durch staubförmige Verunreinigungen der Umgebungsluft.

Durch diese erfindungsgemäße Ausbildung ist es möglich, unter Verwendung der bisherigen Einspann- und Antriebsvorrichtung und eines ortsfesten Lasers das erfindungsgemäße Verfahren durchzuführen; wozu es lediglich erforderlich ist, auf dem sich entsprechend der Wickelgeschwindigkeit und der Steigung des aufzuwickelnden Bandes bewegenden Schlitten mindestens eine Strahlumlenkung für den Laserstrahl vorzusehen.

Die Vorrichtung kann aber auch mit einer das zu bewickelnde Rohr zumindest endseitig einspannenden und um seine Längsachse drehenden Einspann- und Antriebsvorrichtung und mit einer Bewicklungseinrichtung aus einer Bandvorratsrolle sowie einer Richt- und Bremseinrichtung sowie Führungen für das Band versehen sein, wobei die Einspann- und Antriebsvorrichtung das Rohr in Längsachsrichtung und in konstantem Abstand an der ortsfesten Bewicklungseinrichtung vorbeiführt, wobei der Laser ortsfest neben und/oder über der Bewicklungseinrichtung angeordnet ist, wobei der Laserstrahl direkt oder mittels mindestens einer Strahlumlenkung auf den Bereich der Auflaufstelle des Bandes auf die Rohroberfläche gerichtet ist und wobei eine vom Laserstrahl beaufschlagte erste Strahlumlenkung und eine von dem reflektierten Laserstrahl der ersten Strahlumlenkung beaufschlagte weitere Strahlumlenkung vorgesehen ist, die den Laserstrahl unter dem gewünschten Winkel zur Drehachse des zu wichelnden Rohres im Bereich der Auflaufstelle des Bandes auf die Rohroberfläche richtet.

Diese Vorrichtung hat den Vorteil, daß der Abstand zwischen Laser und Schweißstelle im Bereich der Auflaufstelle des Bandes auf die Rohroberfläche konstant ist, so daß die mit einer bewegten Führung des Laserstrahles verbundenen Einstellprobleme und möglichen Anderungen der Strahlintensität im Schweißbereich entfallen. Außerdem können bei der festen Führung des Laserstrahles Strahlumlenkungen eingespart und der mit Strahlumlenkungen verbundene Intensitätsverlust verringert werden.

Mit dieser Strahlumlenkung, die den auftreffenden Laserstrahl stets unter dem gleichen Winkel auf die Schweißstelle richtet, kann das Prinzip der Erfindung verwirklicht werden. Hierdurch wird eine für Montage, Wartung und Betrieb günstige Wahlfreiheit der Anordnung der Bandvorratsrolle, der Richt- und Bremseinrichtung sowie Führungen für das Band erreicht und kann der Laserstrahl einfach in dem bevorzugten spitzen Winkel zur Drehachse des Rohres auf die Auflaufstelle des Bandes gerichtet werden.

Eine vorteilhafte Ausgestaltung ist dadurch gekennzeichnet, daß eine den Laserstrahl auf den Bereich der Auflaufstelle des Bandes auf die Rohroberfläche bündelnde Fokussierung vorgesehen ist, wodurch eine hohe Intensität des Laserstrahles erreicht wird. Bei einer drehbankähnlichen Einspann- und Antriebsvorrichtung wird die Fokussierung bevorzugt auf dem Schlitten angeordnet. Besonders kurze Linsenbrennweiten werden erreicht, wenn die Fokussierung zwischen Strahlumlenkung und Auflaufstelle des Bandes auf dem zu bewickelnden Rohr angeordnet ist, weil sich die Fokussierung dann unmittelbar neben der Schweißstelle befindet und damit erreicht wird, daß zweifelsfrei die benötigte Schwellenenergie zur Plasmazündung überschritten wird.

Bei einer bevorzugten Ausgestaltung ist zum Zwecke der Optimierung des Schweißprozesses vorgesehen, daß sowohl der Durchmesser des Laserstrahles als auch dessen Auftreffwinkel auf die Rohroberfläche einstellbar ist. Wenn die optische Achse des Laserstrahles bezüglich der Auflaufstelle des Bandes auf die Rohroberfläche einstellbar ist, kann das Schweißverfahren auch bei Bändern verschiedener Wandstärke optimiert werden.

Bei einer Weiterbildung der Erfindung wird der Laserstrahl vom Laser parallel zur Längsachse des Rohres auf eine zur Längsachse geneigte Strahlumlenkung geleitet, so daß der Laserstrahl unabhängig von der Position des Schlittens einer drehbankähnlichen Einspann- und Antriebsvorrichtung stets auf die gleiche Stelle der Strahlumlenkung fällt und stets eine konstante Leistung in die Schweißstelle eingekoppelt wird. Dabei ist es besonders vorteilhaft, wenn die Achse des Lasers parallel zur Längsachse des Rohres ausgerichtet ist, weil dann eine weitere Strahlumlenkung und der damit verbundene Leistungsverlust und die damit verbundenen Justierprobleme entfallen.

Die bandförmige Seitenwand kann mittels seitlicher Führungen auf die Wickelrollen des Führungskanales gezwungen werden. Sie kann aber ohne die Gefahr eines Blockierens aufgewickelt werden, wenn die Wickelrollen die bandförimge Seitenwand in Aufwickelrichtung vorspannende Federn haben.

Aus Sicherheitsgründen und zur Verminderung der Streuung kann der Laserstrahl auf dem Schlitten einer drehbankähnlichen Einspann- und Antriebsvorrichtung zwischen der Strahlumlenkung und der Fokussierung in einer Rohrführung gekapselt sein. Aus den gleichen Gründen kann der Laserstrahl bei einer ortsfesten Bewicklungseinrichtung zwischen Laser und Rohr in einer Rohrführung gekapselt sein. Die Streuung des Laserstrahles wird weiter vermindert, wenn der ortsfeste Führungskanal bzw. die Rohrführung unter einem geringen Überdruck mit einem Schutzgas gespült werden.

Ein Laserstrahl ausreichender Leistungsdichte kann durch einen CO₂-Laser erzeugt werden.

Um ein Ausrichten eines Schutzgasstrahles auf die Schweißstelle zu erleichtern, ist neben der Auflaufstelle des Bandes auf dem zu bewickelnden Rohr eine den Laserstrahl umgebende Ringspaltdüse für ein Schutzgas angeordnet, welche mechanisch mit einer Strahlumlenkung oder einer Fokussierung gekoppelt sein kann.

Schließlich ist bei einer vorteilhaften Ausgestaltung vorgesehen, daß die Führungen der Einspann- und Antriebsvorrichtung eine das Band auf den Umfang zu bewickelnden Rohres mit der gewünschten Steigung ausrichtende Richt- und Bremseinrichtung aus zwei planparallelen, etwa um die Banddicke voneinander beabstandeten und das Band seitlich führenden Platten haben und daß die Führungen mindestens einen Führungsscheibensatz aus mindestens auf einem Führungsbolzen um etwa die Banddicke voneinander beabstandet gelagerten Führungsscheiben haben, die das aufgewickelte Band seitlich führen und deren Führungsbolzen entsprechend der gewünschten Steigung ausgerichtet ist. Mit diesen Führungen werden auf konstruktiv einfache Weise wellenförmige Verwerfungen an der Bandunterkante verhindert, so daß der Laserstrahl im Bereich der Auflaufstelle des Bandes die für eine optimale Verschweißung erforderliche Position beibehält.

Auf der Zeichnung ist ein Ausführungsbeispiel der erfindungsgemäßen Vorrichtung schematisch dargestellt, und zwar zeigen:
- Fig. 1: eine Draufsicht auf eine schematische Darstellung der Vorrichtung;
- Fig. 2: dieselbe Vorrichtung in der Vorderansicht;
- Fig. 3: eine perspektivische Darstellung eines mit einem Band zu bewickelnden Rohres einschließlich des zur Verschweißung verwendeten Laserstrahls;
- Fig. 4: einen Längsschnitt durch einen zwei Rippen umfassenden Teil eines Rohres mit gleichzeitiger Darstellung des auf die Auflaufstelle gerichteten Laserstrahls;
- Fig. 5: ein Schliffbild der Rohrwand mit einem verschweißten Band in fünzigfacher Vergrößerung;
- Fig. 6: eine Seitenansicht der Führungen der Vorrichtung mit einer Bandeinführung und drei um ein Rohr verteilt angeordneten Führungsscheibensätzen;
- Fig. 7: ein Längsschnitt eines der Führungsscheibensätze mit drei Führungsscheiben gemäß Fig. 6.

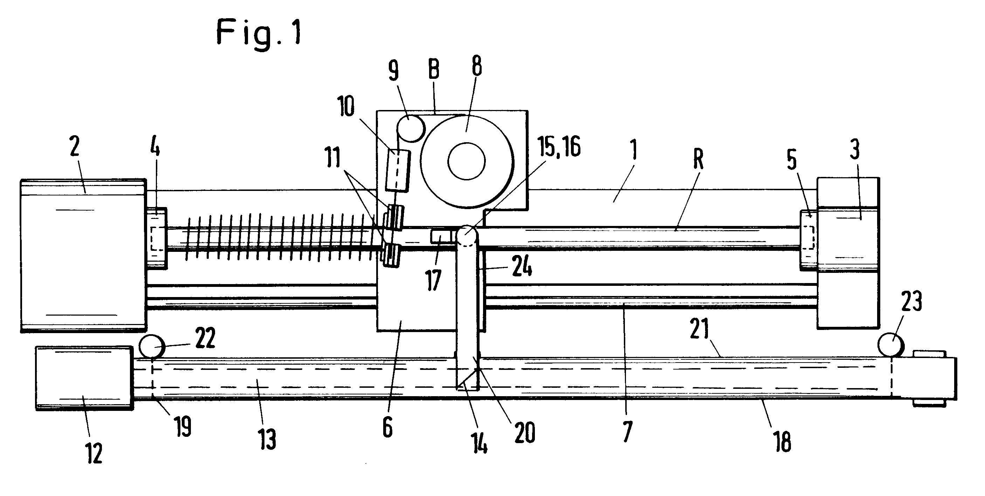

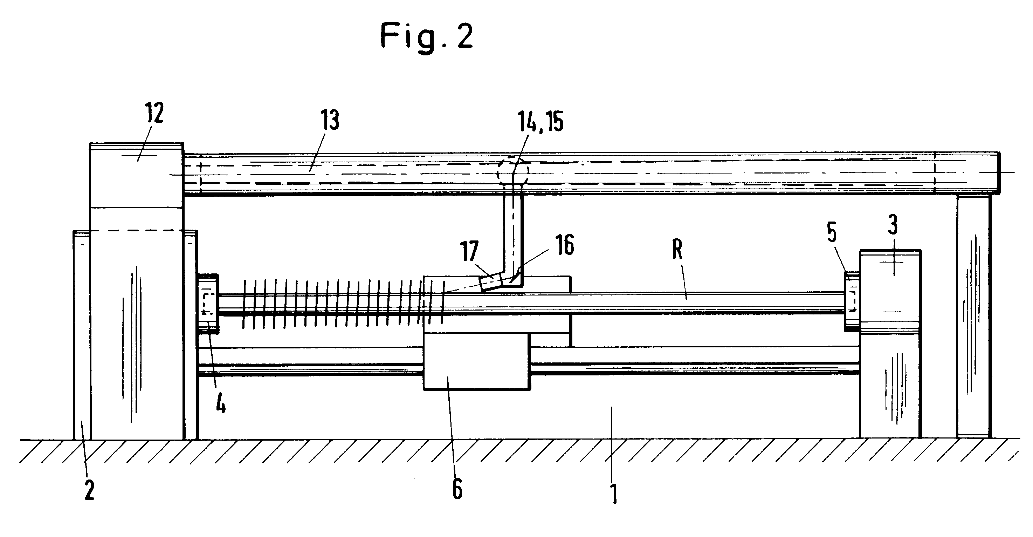

Die in Fig.1 und 2 schematisch in der Draufsicht und der Vorderansicht dargestellte Vorrichtung umfaßt ein mit einer Schlittenführung versehenes Maschinenbett 1, an dessen einem Ende ein Antriebs- und Räderkasten 2 und an dessen anderem Ende ein Reitstock 3 angeordnet sind. Ein zu bewickelndes Rohr R wird mit seinen Enden einerseits in einem angetriebenen Spannzeug 4 des Antriebs- und Räderkastens 2 und andererseits in einem nichtangetriebenen Spannzeug 5 des Reitstockes 3 eingespannt, so daß es drehend angetrieben werden kann.

Auf den Schlittenführungen des Maschinenbettes 1 ist ein Schlitten 6 längsverschiebbar gelagert, der über eine Leitspindel 7 mit dem Antrieb des Antriebs- und Räderkastens 2 in Verbindung steht. Auf diese Weise ist es möglich, den Schlitten 6 in Abhängigkeit von der Drehzahl des Spannzeuges 4 und entsprechend einer einstellbaren Steigung des auf das Rohr R aufzuwickelnden Bandes anzutreiben.

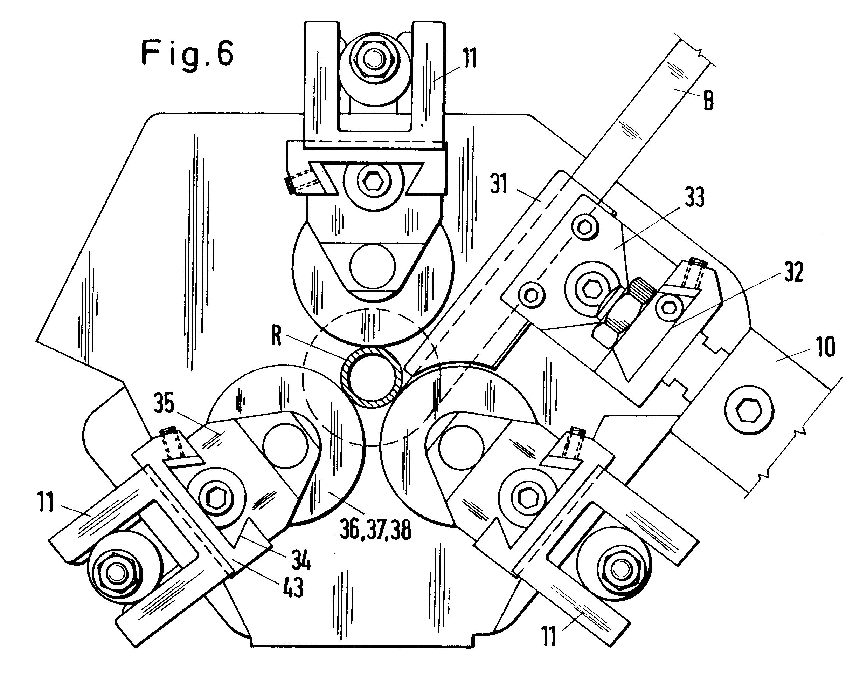

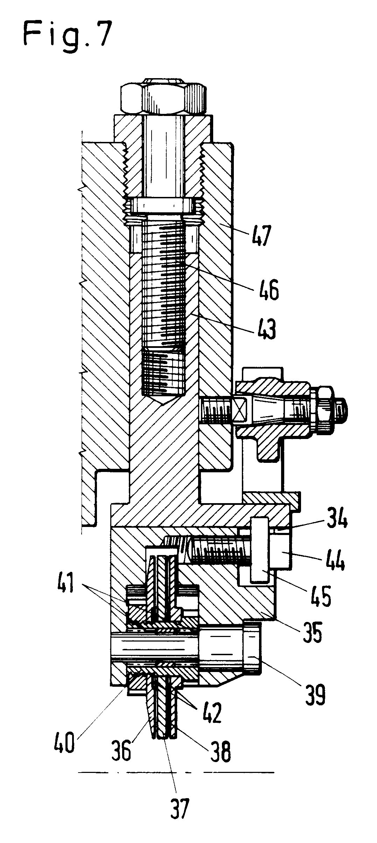

Das auf das Rohr R aufzuwickelnde Band B von einer Vorratsrolle 8 abgezogen, die auf dem Schlitten 6 angeordnet ist. Das Band B wird beim Ausführungsbeispiel gemäß Fig.1 über eine Umlenkrolle 9 einer Richt- und Bremseinrichtung 10 zugeführt, die das aufzuwickelnde Band B einerseits richtet und andererseits eine einstellbare Bremswirkung erzeugt, so daß das Band B unter Zugkraft dem Rohr R zugeführt wird. Die Zufuhr erfolgt mit Hilfe von Bandführungen 11, die ebenso wie die Richt- und Bremseinrichtung 10 und die Umlenkrolle 9 auf dem Schlitten 6 angeordnet sind. Die Richt- und Bremseinrichtung 10 und die Bandführung 11 werden noch anhand der Fig. 6 und 7 erläutert.

Wie die Figuren 1 bis 3 erkennen lassen, wird das mit seinem Anfang auf dem Rohr R befestigte Band B wendelförmig auf der Außenfläche des Rohres R aufgewickelt, wenn das Rohr R mit Hilfe des im Antriebs- und Räderkasten 2 untergebrachten Antriebes gedreht und der Schlitten 6 in Abhängigkeit von der Drehbewegung mit einer einstellbaren Vorschubbewegung mittels der Leitspindel 7 entlang des Maschinenbettes 1 bewegt wird. Hierbei bildet das Band B eine endlose Rippe zur Vergrößerung der Wärmetauschfläche des Rohres R.

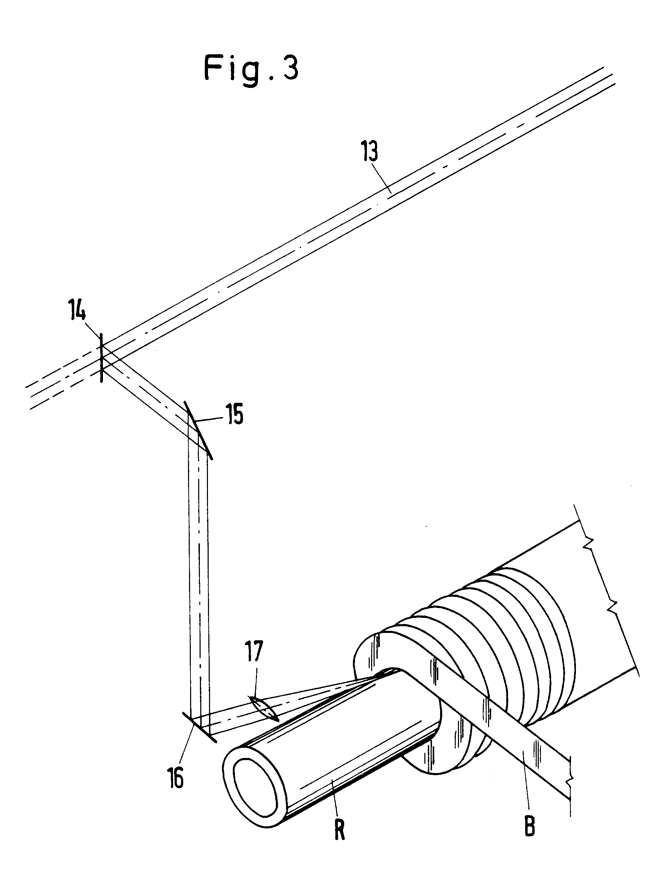

Um das Band B an seiner wendelförmig auf der Rohroberfläche verlaufenden Kontaktfläche mit dem Rohr R zu verschweißen, ist beim Ausführungsbeispiel seitlich neben dem Antriebs- und Räderkasten 2 ein CO₂-Laser 12 ortsfest angeordnet, dessen Laserstrahl 13 parallel zur Längsachse des Rohres R verläuft. Der Laserstrahl 13 trifft auf eine erste Strahlumlenkung 14, die auf dem Schlitten 6 angeordnet ist und die den Laserstrahl 13 beim Ausführungsbeispiel um einen Winkel von 90°, d.h. quer zur Bewegungsrichtung des Schlittens 6 umlenkt. Der Laserstrahl 13 trifft nach der ersten Strahlumlenkung 14 auf eine zweite Strahlumlenkung 15, die den Laserstrahl 13 einer darunter angeordneten weiteren Strahlumlenkung 16 zuführt. Die weitere Strahlumlenkung 16 richtet den Laserstrahl 13 auf eine Fokussierung 17, die den Laserstrahl 13 auf die Rohroberfläche im Bereich derjenigen Stelle fokussiert, an der das aufzuwickelnde Band B auf die Rohroberfläche aufläuft, wie dies am besten in Fig. 3 zu erkennen ist. Mit den drei Strahlumlenkungen 14,15,16 wird eine weitgehende Wahlfreiheit bei der Aufstellung des CO₂-Lasers 12 erreicht, der über der Längsachse des Rohres R angeordnet ist. Bei der vorteilhaften Ausrichtung der p-Komponente des linear polarisierten Laserstrahles 13 tangential zur Rohroberfläche und senkrecht zur Drehachse des Rohres R ist zu beachten, daß jede Strahlumlenkung 14,15,16 die Polarisationsebene um 90° dreht. Dies kann ggfs. durch eine optische Korrektureinrichtung des CO₂-Lasers 12 ausgeglichen werden, bzw. durch eine weitere Strahlumlenkung.

Die in den Fig. 1 und 2 dargestellte Divergenz des Laserstrahles 13 ist für den Durchmesser des Laserstrahles 13 auf der Linse der Fokussierung 17 und somit für die Intensität des Laserstrahles im Brennpunkt mitentscheidend. Die größtmögliche Intensität wird erreicht, wenn der Durchmesser des Laserstrahles die Linse vollständig erfasst und nicht von der Linsenfassung abgeschattet wird. Somit begrenzt die Divergenz des Laserstrahles den möglichen Schweißweg, weil oberhalb eines maximalen Strahldurchmessers und unterhalb eines minimalen Strahldurchmessers auf der Linse der Fokussierung 17 im Brennpunkt nicht mehr genügend Leistung für das Erzeugen bzw. Aufrechterhalten des Schweißplasmas zur Verfügung steht. Um eine ausreichende Intensität des Laserstrahls 13 im Brennpunkt der Fokussierung 17 zu erhalten, wird außerdem der Laser 12 im Ringmode TEM₀₁ betrieben und ist eine kurze Linsenbrennweite von 125 mm vorgesehen.

Aus Sicherheitsgründen und zur Minderung von Leistungsverlusten durch Streuung des Laserstrahles 13 an partikelförmigen Verunreinigungen der Umgebungsluft, ist der Laserstrahl 13 in einem parallel zur Längsachse des Rohres R angeordneten Führungskanal 18 geführt. Bis auf eine Eintrittsöffnung 19 und eine Austrittsöffnung 20 für den Laserstrahl ist der Führungskanal 18 vollständig geschlossen.

Er hat eine dem Schlitten 6 der Vorrichtung zugewandte, bandförmige Seitenwand 21, die an beiden Enden auf ortsfesten Wickelrollen 22,23 wickelbar ist. Die Wickelrollen 22,23 sind mit die bandförmige seitenwand 21 straffenden Federn versehen.

In die Austrittsöffnung 20 der bandförmigen Seitenwand 21 ragt eine fest mit dem Schlitten 6 verbundene Rohrführung 24 hinein, welche zugleich Träger für die Strahlumlenkungen 14,15,16 und die Fokussierung 17 ist und den Laserstrahl zwischen den Strahlumlenkungen 14,15,16 und der Fokussierung 18 kapselt. Wenn der Schlitten 6 in Längsrichtung des Rohres R verfahren wird, nimmt die Rohrführung 24 den Rand der Austrittsöffnung 20 der bandförmigen Seitenwand 21 mit und wickelt dabei die Seitenwand 21 auf eine Wickelrolle 22,23 auf und von einer Wickelrolle 23,22 ab. Auf diese Weise bleibt der Laserstrahl 13 zwischen CO₂-Laser 12 und Fokussierung 17 über den gesamten Verfahrweg des Schlittens 6 von der Umgebung abgekapselt. Dabei wird in den Führungskanal 18 Stickstoff als Schutzgas unter einem geringen Überdruck eingeleitet, welches auch in die hineinragende Rohrführung 24 strömt und die möglicherweise verunreinigte Umgebungsluft verdrängt. Die Leckagen des Systems werden durch eine geringfügige Stickstoffnachführung ausgeglichen.

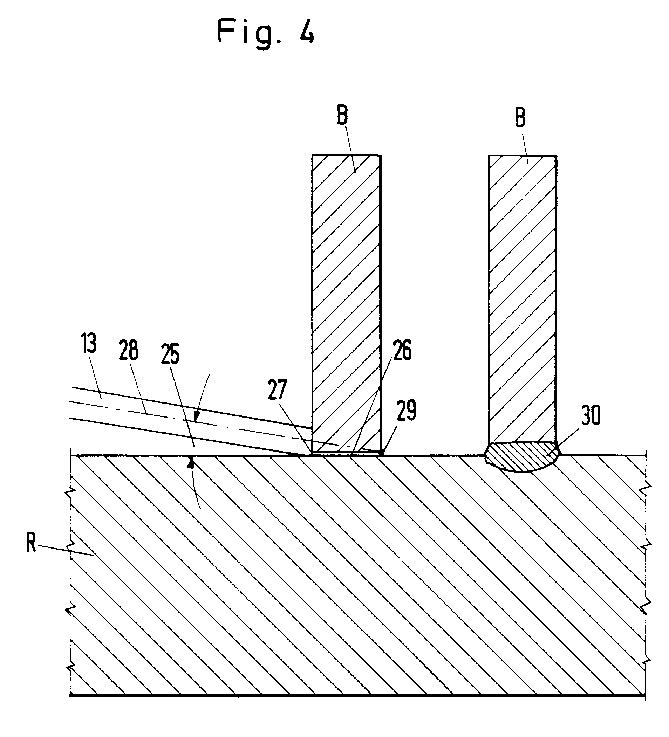

Wie insbesondere Fig. 4 zeigt, trifft der Laserstrahl 13 unter einem spitzen Auftreffwinkel 25 auf die Rohroberfläche auf. Der optimale Auftreffwinkel 25 zwischen dem Laserstrahl 13 und der Längsachse des Rohres R liegt in einem Bereich zwischen 15 und 25°.

Durch den fokussierten Laserstrahl 13 wird im Bereich der Auflaufstelle des Bandes B auf die Rohroberfläche eine Fläche erfaßt, die in axialer Richtung des Rohres R mindestens der Breite der Bandunterkante und in Umfangsrichtung des Rohres R etwa diesem Betrag entspricht. Diese punktförmige Fläche wird vom Laserstrahl 13 aufgeschmolzen, wobei dieses Aufschmelzen ausschließlich an der Rohroberfläche erfolgt, so daß infolge der flächenmäßigen Begrenzung und geringen Tiefe keine Gefügeänderungen am Material des Rohres und keine Materialversprödung eintreten. Gleichzeitig mit der punktförmigen Fläche auf der Rohroberfläche wird die Unterkante des zulaufenden Bandes B, und zwar ebenfalls ausschließlich im Bereich der Auflaufstelle durch den Laserstrahl 13 angeschmolzen. Es ergeben sich somit zwei punktförmige auf- bzw. angeschmolzene Flächenbereiche einerseits auf der Rohroberfläche und andererseits an der Bandunterkante.

Besonders vorteilhaft ist es dabei, daß der Laserstrahl im Bereich der Auflaufstelle des Bandes auf das Rohr R auf einen Spalt 26 trifft, der durch Reflektion und Absorption des Laserstrahles 13 eine gleichmäßige Wärmeeinbringung bewirkt. Damit der Laserstrahl 13 leichter in den Spalt 26 eindringen kann, ist er direkt auf eine Spaltöffnung 27 bzw. auf die Oberfläche des Rohres R neben der Spaltöffnung gerichtet. Außerdem ist die optische Achse 28 des Laserstrahles 13 auf eine Spaltöffnung 29 gerichtet, die auf der dem einfallenden Laserstrahl 13 gegenüberliegenden Seite des Bandes B ausgibildet ist. Hierdurch wird insbesondere bei dickeren Bändern B die Wärmeeinbringung verbessert. Für eine optimale Reflektion auf der Rohroberfläche ist die p-Komponente des Laserstrahles 13 senkrecht zur Zeichenebene der Fig. 4 gerichtet.

Infolge der auf das zulaufende Band B ausgeübten und an der Richt- und Bremseinrichtung 10 einstellbaren Zugkraft werden die beiden punktförmig auf- bzw. angeschmolzenen Flächenbereiche beim Auflaufen des Bandes B auf das Rohr R spaltfrei zusammengeführt. Beim anschließenden Erkalten während der Drehbewegung des Rohres R werden die beiden Flächenbereiche miteinander verbunden. Da der Laserstrahl 13 kontinuierlich auf den Bereich der Auflaufstelle des Bandes B auf die Rohroberfläche gerichtet ist, ergibt sich hierdurch eine kontinuierliche und restspaltfreie Verschweißung des wendelförmig aufgewickelten Bandes B mit dem drehenden Rohr R, ohne daß es erforderlich ist, zusätzliches Schweißmaterial zuzuführen und ohne daß Gefügeänderungen oder Materialversprödungen am Rohr R bzw. Band B auftreten.

Der unter einem spitzen Auftreffwinkel 25 zur Drehachse des Rohres R im Bereich der Auflaufstelle des Bandes B auf die Rohroberfläche gerichtete Laserstrahl 13 wird mittels der Fokussierung 17 derart fokussiert, daß die axiale Erstreckung seiner Auftrefffläche auf der Rohroberfläche geringfügig größer als die Breite der Bandunterkante ist und daß er außerdem die gesamte Breite der Bandunterkante erfaßt. Es ergibt sich somit eine restspaltfreie Verschweißung, die einerseits Spaltkorrosion verhindert und andererseits eine gute Wärmeleitung zwischen Rohr und Band garantiert, so daß sich der Rippenwirkungsgrad mit dem Ziel einer größeren Wärmeübertragungsleistung erhöht.

Sowohl der Durchmesser des Laserstrahles 13 als auch dessen Auftreffwinkel 25 auf die Rohroberfläche kann eingestellt werden. Weiterhin ist es möglich, den Mittelpunkt des Laserstrahls 13 bezüglich der Auflaufstelle des Bandes B auf die Rohroberfläche einzustellen, so daß der Mittelpunkt des Laserstrahls 13 entweder unmittelbar auf die Auflaufstelle gerichet ist oder kurz vor oder hinter diese Auflaufstelle. Die jeweilige Einstellung hängt unter anderem von der Energiedichte des Laserstrahles 13, seinem Durchmesser und den zu verbindenden Materialien ab.

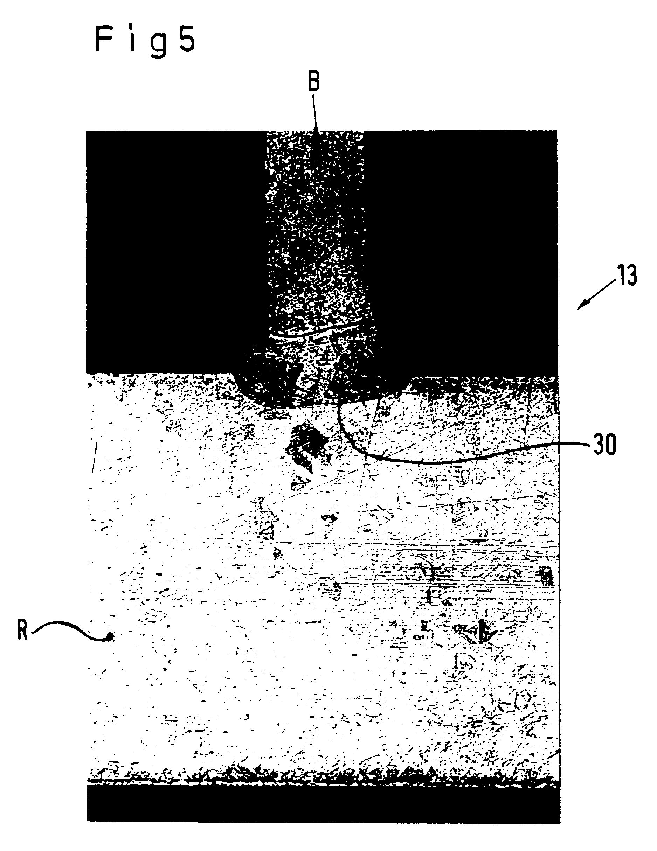

Bei optimaler Einstellung der Vorrichtung ergibt sich infolge der gleichmäßigen Wärmeeinbringung eine annähernd symmetrische Schweißnaht 30, die den Spalt 26 zwischen Band B und Rohr R vollständig schließt. Wie besonders das Schliffbild gemäß Fig. 5 zeigt, ist die Einfallsrichtung des Laserstrahles 13 fast nicht erkennbar. Dabei haben die in Band B und Rohr R angeschmolzenen Bereiche ungefähr eine konstante Eindringtiefe. Anhand des Schliffbildes wird auch deutlich, daß die Querschnitte des Rohres R und des Bandes B durch die Schweißnaht 30 praktisch nicht gemindert werden, so daß sich deren Festigkeitswerte kaum verändern.

Die in der Fig. 6 dargestellte Richt- und Bremseinrichtung 10 für das Band B hat zwei planparallele, etwa um die Banddicke voneinander beabstandete und das Band seitlich führende Platten 31, die das Band B tangential und mit der gewünschten Steigung an das Rohr R heranführen und durch Reibung die gewünschte Zugkraft auf das Band B ausüben. Zum Einstellen der Zugkraft bzw. zum Anpassen an veränderliche Banddicken kann der Abstand der Platten 31 über einen in einer Schwalbenschwanzführung 32 fixierbaren Plattenhalter 33 eingestellt werden. Die Richt- und Bremseinrichtung 10 ist wie die nachfolgend erörterten Bandführungen 11 auf dem Schlitten 6 für das jeweils zu bewickelnde Rohr R und die jeweils zu wickelnde Steigung der Rippen einstellbar befestigt.

Die Bandführungen 11 haben ein in einer Schwalbenschwanzführung 34 einstellbar befestigtes Böckchen 35, in dem drei Führungsscheiben 36,37,38 drehbar gelagert sind. Wie die Fig. 7 zeigt, sind die Führungsscheiben 36,37,38 mittels eines zwischen einem Führungsbolzen 39 und einer Buchse 40 ausgebildeten Nadellagers 41 gelagert, wobei zwischen den beiden äußeren Führungsscheiben 36,38 und der mittleren Führungsscheibe 37 ringförmige Abstandshalter 42 angeordnet sind. Zwischen den äußeren Führungsscheiben 36,38 und der mittleren Führungsscheibe sind somit zwei Führungsspalte ausgebildet, welche etwa die Wandstärke des zu verschweißenden Bandes B haben. Die Führungsscheiben 36,37,38 sind geschliffen und anschließend hartverchromt.

Zum Verstellen des Böckchens 35 in der Schwalbenschwanzführung 34 eines Führungsscheibenhalters 43 ist eine Stellschraube 44 vorgesehen, die sich über einen Ring 45 an dem Führungsscheibenhalter 43 abstützt. Der Führungsscheibenhalter 43 wiederum ist mit einer Spindel 46 einstellbar in einem Oberteil 47 befestigt.

Es sind drei Bandführungen 11 gleichmäßig über Umfang des Rohres R verteilt angeordnet. Eine Bandführung 11 führt das Band B genau an der Auflaufstelle auf das Rohr R. Das Band B läuft von der Richt- und Bremseinrichtung in den Führungsspalt zwischen der äußeren Führungsscheibe 36 und der mittleren Führungsscheibe 37 dieser Bandführung 11 ein und wird von dem Rohr R durch die entsprechenden Führungsspalte der beiden weiteren Bandführungen 11 gedreht. Nach einer Umdrehung gelangt das Band B in den zweiten Führungsspalt zwischen der mittleren Führungsscheibe 37 und der äußeren Führungsscheibe 38 der an der Auflaufstelle angeordneten Bandführung 11 und wird weiter durch die entsprechenden Führungsspalte der beiden weiteren Bandführungen gedreht. Durch diese Bandführungen 11 wird das Band B ohne wellenförmige Verwerfungen an der Bandunterkante auf das Rohr R gewickelt, weil es bereits an der Auflaufstelle geführt wird und bei dem zweimaligen Umlauf durch die über den Umfang verteilten Bandführungen 11 in die gewünschte Form gezwungen wird. Durch die genaue Ausrichtung des Bandes B auf das Rohr R können die optimalen Randbedingungen für das Verschweißen mit dem Laserstrahl eingehalten werden.

Mit der voranstehend beschriebenen Vorrichtung und dem geschilderten Verfahren können Wärmetauscherrohre hergestellt werden, bei denen das Rohr R und das Band B aus beliebigen metallischen Werkstoffen bestehen. Ein typisches Beispiel für ein derartiges Wärmetauscherrohr ist ein Strahlrohr mit einem Rohraußendurchmesser von 25,4 mm und einer Rohrwanddicke von 2,3 mm. Der Rippenaußendurchmesser beträgt 50,8 mm bei einer Banddicke von 1,0 mm und einer Rohrteilung von 5 Rippen auf 25,4 mm Rohrlänge. Bei einem zweitem Beispiel besteht sowohl das Rohr R als auch das Band B aus Edelstahl. Bei gleicher Rohrteilung und einem Rohraußendurchmesser von 25,4 mm sowie einem Rippenaußendurchmesser von 50,8 mm beträgt in diesem Fall die Rohrwanddicke 1,5 mm und die Banddicke 0,4 mm. Bei einem herkömmlichen Schweißverfahren müßte wegen der größeren Wärmeeinbringzone für die gleichen Festigkeitswerte eine Rohrwanddicke von 2,4 mm vorgesehen sein. Außerdem sind mit dem erfindungsgemäßen Verfahren Rohre mit Bändern von nur 0,4 mm Dicke verschweißbar.

| **Bezugszeichenliste** | | | |
|---|---|---|---|
| B | Band | 30 | Schweißnaht |
| R | Rohr | 31 | Platten |
| 1 | Maschinenbett | 32 | Schwalbenschwanzführung |
| 2 | Antriebs- und Räderkasten | 33 | Plattenhalter |
| 3 | Reitstock | 34 | Schwalbenschwanzführung |
| 4 | Spannzeug | 35 | Böckchen |
| 5 | Spannzeug | 36 | Führungsscheibe (äußere) |
| 6 | Schlitten | 37 | Führungsscheibe (mittlere) |
| 7 | Leitspindel | 38 | Führungsscheibe (äußere) |
| 8 | Vorratsrolle | 39 | Führungsbolzen |
| 9 | Umlenkrolle | 40 | Buchse |
| 10 | Richt- und Bremseinrichtung | 41 | Nadellager |
| 11 | Bandführung | 42 | Abstandshalter |
| 12 | CO₂-Laser | 43 | Führungsscheibenhalter |
| 13 | Laserstrahl | 44 | Stellschraube |
| 14 | Strahlumlenkung (erste) | 45 | Ring |
| 15 | Strahlumlenkung (zweite) | 46 | Spindel |
| 16 | Strahlumlenkung (weitere) | 47 | Oberteil |
| 17 | Fokussierung | | |
| 18 | Führungskanal | | |
| 19 | Entrittsöffnung | | |
| 20 | Austrittsöffnung | | |
| 21 | Seitenwand (bandförmig) | | |
| 22 | Wickelrolle | | |
| 23 | Wickelrolle | | |
| 24 | Rohrführung | | |
| 25 | Auftreffwinkel | | |
| 26 | Spalt | | |
| 27 | Spaltöffnung | | |
| 28 | optische Achse | | |
| 29 | Spaltöffnung | | |

## Patentansprüche

1. Verfahren zur Herstellung von Wärmetauscherrohren aus Metall mit durch Rippen vergrößerter Wärmetauschfläche, bei dem ein sich drehendes Rohr auf seiner Außenfläche wendelförmig mit die Rippen bildendem Band bewickelt wird, das unter Zugkraft der Rohroberfläche zugeführt und dessen Unterkante mit dem Rohr verschweißt wird,
**dadurch gekennzeichnet,**
daß die wendelförmig auf der Rohroberfläche verlaufende Kontaktfläche zwischen Rohr und Bandunterkante ausschließlich an der Rohroberfläche durch einen Laserstrahl aufgeschmolzen wird, der im Bereich der Auflaufstelle des Bandes auf die Rohroberfläche gerichtet ist und eine Fläche der Rohroberfläche aufschmilzt, die in axialer Richtung des Rohres mindestens der Breite der Bandunterkante und in Umfangsrichtung des Rohres etwa diesen Betrag entspricht, daß durch diesen Laserstrahl zugleich die Unterkante des zulaufenden Bandes ausschließlich im Bereich der Auflaufstelle angeschmolzen wird,
daß die beiden auf- bzw. angeschmolzenen Flächenbereiche einerseits auf der Rohroberfläche und andererseits an der Bandunterkante infolge der auf das zulaufende Band ausgeübten Zugkraft beim Auflaufen des Bandes auf das Rohr spaltfrei zusammengeführt und beim anschließenden Erkalten derart miteinander verbunden werden, daß sich eine kontinuierliche, restspaltfreie Verschweißung des wendelförmig aufgewickelten Bandes mit dem Rohr ergibt
und daß der Laserstrahl unter einen spitzen Winkel zur Drehachse des Rohres im Bereich der Auflaufstelle des Bandes auf die Rohroberfläche gerichtet wird.

2. Verfahren nach Anspruch 1, dadurch gekennzeichnet, daß der Laserstrahl unter einem Winkel von etwa 15 bis 25° zur Drehachse des Rohres im Bereich der Auflaufstelle auf die Rohroberfläche gerichtet wird.

3. Verfahren nach Anspruch 1 oder 2, dadurch gekennzeichnet, daß der Laserstrahl im Bereich der Auflaufsteile des Bandes direkt in eine Spaltöffnung eines Spaltes zwischen Band und Rohr bzw. direkt auf die Rohroberfläche neben der Spaltöffnung gerichtet wird.

4. Verfahren nach einen der Ansprüche 1 bis 3, dadurch gekennzeichnet, daß der Laserstrahl linear polarisiert wird und daß die p-Komponente des Laserstrahles im Bereich der Auflaufstelle das Bandes tangential zur Rohroberfläche und senkrecht zur Drehachse des Rohres gerichtet wird.

5. Verfahren nach einem der Ansprüche 1 bis 4, dadurch gekennzeichnet, daß der Laserstrahl derart fokussiert wird, daß er sich axial auf der Rohroberfläche mindestens unter der gesamten Bandunterkante erstreckt.

6. Verfahren nach einem der Ansprüche 1 bis 5, dadurch gekennzeichnet, daß der Laserstrahl derart fokussiert wird, daß mindestens die gesamte Breite der Bandunterkante vom Laserstrahl erfasst wird.

7. Verfahren nach einem der Ansprüche 1 bis 6, dadurch gekennzeichnet, daß der Laserstrahl im Bereich der Auflaufstelle des Rohres mit seiner optischen Achse auf eine Spaltöffnung gerichtet wird, die zwischen Band und Rohr auf der dem einfallenden Laserstrahl gegenüberliegenden Seite des Bandes ausgebildet ist.

8. Verfahren nach einem der Ansprüche 1 bis 7, dadurch gekennzeichnet, daß der Laserstrahl eines im Ringmode TEM₀₁ betriebenen Lasers zum Verschweißen von Band und Rohr verwendet wird.

9. Verfahren nach einem der Ansprüche 1 bis 8, dadurch gekennzeichnet, daß der Laserstrahl vor dem Verschweißen von Band und Rohr in einem Schutzgas, insbesondere in Stickstoff geführt wird.

10. Verfahren nach einem der Ansprüche 1 bis 9, dadurch gekennzeichnet, daß der Bereich der Auflaufstelle des Bandes beim Schweißen mit einen Schutzgas, insbesondere mit Helium oder Argon umspült wird.

11. Vorrichtung zur Durchführung des Verfahrens nach einem der Ansprüche 1 bis 10, unter Verwendung einer drehbankähnlichen Einspann- und Antriebsvorrichtung für das jeweils zu bewickelnde Rohr (R) mit einem von einer Leitspindel (7) angetriebenen Schlitten (6), auf dem die Bandvorratsrolle (8) sowie eine Richt- und Bremseinrichtung (10) sowie Führungen (11) für das Band angeordnet sind,
**dadurch gekennzeichnet,**
daß auf dem Schlitten (6) mindestens eine Strahlumlenkung (14,15,16) für den Laserstrahl (13) angeordnet ist und
daß der Laserstrahl (13) eines ortsfest neben und/oder über der Einspann- und Antriebsvorrichtung angeordneten Lasers (12) auf die Strahlumlenkung (14) gerichtet ist,
daß der Laserstrahl (13) vom Laser (12) aus parallel zur Längsachse des Rohres (R) durch einen ortsfest neben und/oder über der drehbankähnlichen Einspann- und Antriebsvorrichtung angeordneten Führungskanal (18) geführt wird, daß der Führungskanal (18) eine bandförmige Seitenwand (21) hat, die beidenends auf ortsfesten Wickelrollen (22, 23) wickelbar ist, daß die bandförmige Seitenwand (21) am Schlitten (6) festgelegt ist, so daß sie beim Verfahren des Schlittens (6) von der einen Wickelrolle (22, 23) ab- und auf die andere Wickelrolle (23, 22) aufgewickelt wird, daß eine Strahlumlenkung (14) des Schlittens in den Führungskanal (18) eingreift und daß der Laserstrahl (13) von der Strahlumlenkung (14) durch eine Austrittsöffnung (20) der bandförmigen Seitenwand (21) aus dem Führungskanal (18) ausgekoppelt wird.

12. Vorrichtung zur Durchführung des Verfahrens nach einem der Ansprüche 1 bis 10,
mit einer das zu bewickelnde Rohr zumindest endseitig einspannenden und um seine Längsachse drehenden Einspann- und Antriebsvorrichtung und
mit einer Bewicklungseinrichtung aus einer Bandvorratsrolle sowie einer Richt- und Bremseinrichtung sowie Führungen für das Band,
**dadurch gekennzeichnet,**
daß die Einspann- und Antriebsvorrichtung das Rohr in Längsrichtung und in konstantem Abstand an der ortsfesten Bewicklungseinrichtung vorbeiführt,
daß der Laser ortsfest neben und/oder über der Bewicklungseinrichtung angeordnet ist, wobei der Laserstrahl direkt oder mittels mindestens einer Strahlumlenkung auf den Bereich der Auflaufstelle des Bandes auf die Rohroberfläche gerichtet ist, daß eine vom Laserstrahl (13) beaufschlagte erste Strahlumlenkung (14) vorgesehen ist und daß eine von dem reflektierten Laserstrahl (13) der ersten Strahlumlenkung (14) beaufschlagte weitere Strahlumlenkung (16) vorgesehen ist, die den Laserstrahl (13) unter dem gewünschten Winkel (25) zur Drehachse des zu bewickelnden Rohres (R) in Bereich der Auflaufstelle des Bandes (B) auf die Rohroberfläche richtet.

13. Vorrichtung nach einem der Ansprüche 11 oder 12, dadurch gekennzeichnet, daß eins den Laserstrahl (13) auf den Bereich der Auflaufstelle des Bandes auf die Rohroberfläche bündelnde Fokussierung (17) vorgesehen ist.

14. Vorrichtung nach Anspruch 13, dadurch gekennzeichnet, daß die Fokussierung (17) zwischen Strahlumlenkung (14, 15, 16) und Auflaufstelle des Bandes (B) auf dem zu bewickelnden Rohr (R) angeordnet ist.

15. Vorrichtung nach einem der Ansprüche 11 bis 14, dadurch gekennzeichnet, daß sowohl der Durchmesser des Laserstrahles (13) als auch dessen Auftreffwinkel (25) auf die Rohroberfläche einstellbar ist.

16. Vorrichtung nach einem der Ansprüche 11 bis 15, dadurch gekennzeichnet, daß die optische Achse (28) des Laserstrahles (13) bezüglich der Auflaufstelle des Bandes (B) auf die Rohroberfläche einstellbar ist.

17. Vorrichtung nach einem der Ansprüche 11 bis 16, dadurch gekennzeichnet, daß der Laserstrahl (13) vom Laser (12) aus parallel zur Längsachse des Rohres (R) auf eine zur Längsachse geneigte Strahlumlenkung (14) geleitet wird.

18. Vorrichtung nach Anspruch 17, dadurch gekennzeichnet, daß die Achse dem Lasers (12) parallel zur Längsachse des Rohres (R) ausgerichtet ist.

19. Vorrichtung nach Anspruch 11, dadurch gekennzeichnet, daß die Wickelrollen (22,23) die bandförmige Seitenwand (21) in Aufwickelrichtung vorspannende Federn haben.

20. Vorrichtung nach einem der Ansprüche 11 bis 19 ohne Anspruch 12, dadurch gekennzeichnet, daß der Laserstrahl (13) bei einer drehbankähnlichen Einspann- und Antriebsvorrichtung auf dem Schlitten (6) zwischen der Strahlumlenkung (14) und der Fokussierung (17) in einer Rohrföhrung (24) gekapselt ist.

21. Vorrichtung nach Anspruch 12 oder einem der Ansprüche 13 bis 18 in Verbindung mit Anspruch 13, dadurch gekennzeichnet, daß der Laserstrahl bei einer ortsfesten Bewicklungseinrichtung zwischen Laser und Rohr in einer Rohrführung gekapsel ist.

22. Vorrichtung nach Anspruch 11 oder einem der Ansprüche 19 bis 21, dadurch gekennzeichnet, daß der ortsfeste Führungskanal (18) bzw. die Rohrführung (24) des Laserstrahls (13) unter einen geringen Überdeck mit einem Schutzgas gespült werden.

23. Vorrichtung nach einem der Ansprüche 11 bis 22, dadurch gekennzeichnet, daß der Laserstrahl (13) durch einen CO₂-Laser (12) erzeugt wird.

24. Vorrichtung nach einem der Ansprüche 11 bis 23, dadurch gekennzeichnet, daß neben der Auflaufstelle des Bandes (B) auf dem zu bewickelnden Rohr (R) eine den Laserstrahl (13) umgebende Ringspaltdüse für ein Schutzgas angeordnet ist.

25. Vorrichtung nach einem der Ansprüche 11 bis 24, dadurch gekennzeichnet, daß die Führungen der Einspann- und Antriebsvorrichtung eine das Band (B) auf den Umfang des zu bewickelnden Rohres (R) mit der gewünschten Steigung Richt- und Bremseinrichtung (10) aus zwei planparallelen, etwa um die Banddicke voneinander beabstandeten und das Band (B) seitlich führenden Platten (31) haben und daß die Führungen mindestens einen Führungsscheibensatz aus mindestens zwei auf einem Führungsbolzen (39) um etwa die Banddicke voneinander beabstandet gelagerten Führungsscheiben (36,37,38) haben, die das aufgewickelte Band (B) seitlich führen und deren Führungsbolzen (39) entsprechend der gewünschten Steigung ausgerichtet ist.

## Claims

1. A process for the production of metallic heat exchanger tubes with a heat exchange surface enlarged by ribs, wherein a rotating tube is helically wound on its outer surface with a strip which forms the ribs and which is fed under tension to the tube surface and the lower edge of which is welded to the tube,
characterised in that the contact surface between the tube and the lower edge of the strip, which extends helically on the tube surface, is fused exclusively on the tube surface by a laser beam which is directed in the region of the location at which the strip runs up onto the tube surface and fuses an area of the tube surface which in the axial direction of the tube corresponds at least to the width of the lower edge of the strip and in the peripheral direction of the tube corresponds approximately to this amount, that this laser beam simultaneously fuses the lower edge of the incoming strip exclusively in the region of the run-up location, that the two fused surface regions on the one hand on the tube surface and on the other hand at the lower edge of the strip are joined without gaps as a result of the tension exerted upon the incoming strip when the strip runs up onto the tube and on subsequent cooling are connected to one another in such manner that continuous, residual-gap-free welding of the helically wound strip to the tube is obtained, and that the laser beam is directed at an acute angle relative to the axis of rotation of the tube in the region of the location at which the strip runs up onto the tube surface.

2. A process as claimed in Claim 1, characterised in that the laser beam is directed at an angle of approximately 15 to 25 relative to the axis of rotation of the tube in the region of the run-up location onto the tube surface.

3. A process as claimed in Claim 1 or 2, characterised in that in the region of the run-up location of the strip the laser beam is directed directly into a gap opening of a gap between the strip and the tube or directly onto the tube surface next to the gap opening.

4. A process as claimed in one of Claims 1 to 3, characterised in that the laser beam is linearly polarised and that in the region of the run-up location of the strip the p-component of the laser beam is directed tangentially to the tube surface and at right angles to the axis of rotation of the tube.

5. A process as claimed in one of Claims 1 to 4, characterised in that the laser beam is focussed in such manner that it extends axially over the tube surface at least under the entire lower edge of the strip.

6. A process as claimed in one of Claims 1 to 5, characterised in that the laser beam is focussed in such manner that at least the entire width of the lower edge of the strip is covered by the laser beam.

7. A process as claimed in one of Claims 1 to 6, characterised in that in the region of the run-up location of the tube, the optical axis of the laser beam is directed towards a gap opening which is formed between the strip and the tube on the side of the strip opposite the incident laser beam.

8. A process as claimed in one of Claims 1 to 7, characterised in that the laser beam of a laser operated in the ring mode TEM₀₁ is used to weld strip and tube.

9. A process as claimed in one of Claims 1 to 8, characterised in that prior to the welding of the strip and the tube the laser beam is conveyed in a protective gas, in particular nitrogen.

10. A process as claimed in one of Claims 1 to 9, characterised in that the region of the run-up location of the strip is flushed with a protective gas, in particular helium or argon, during the welding.

11. A device for the execution of the process claimed in one of Claims 1 to 10 using a lathe-like clamping- and drive device for the respective tube (R) to be wound, with a carriage (6) which is driven by a guide spindle (7) and on which the strip supply roll (8) and an aligning- and braking device (10) and guides (11) for the strip are arranged, characterised in that at least one beam deflection means (14, 15, 16) for the laser beam (13) is arranged on the carriage (6), and that the laser beam (13) of a laser (12), fixed next to and/or above the clamping- and drive device, is directed towards the beam deflection means (14), that the laser beam (13) is conveyed from the laser (12) in parallel to the longitudinal axis of the tube (R) through a guide channel (18) fixed next to and/or above the lathe-like clamping- and drive device, that the guide channel (18) comprises a band-like side wall (21), which can be wound at both ends onto fixed winding rollers (22, 23), that the band-like side wall (21) is secured to the carriage (6) so that during the displacement of the carriage (6) it is unwound from one winding roller (22, 23) and wound onto the other winding roller (23, 22), that a beam deflection means (14) of the carriage engages into the guide channel (18), and that the laser beam (13) is output-coupled from the guide channel (18) by the beam deflection means (14) through an outlet opening (20) of the band-like side wall (21).

12. A device for the execution of the process claimed in one of Claims 1 to 10, with a clamping- and drive device by which the tube to be wound is clamped at least at one end and is rotated about its longitudinal axis and with a winding device consisting of a strip supply roll and an aligning- and braking device as well as guides for the strip, characterised in that the clamping- and drive device conveys the tube past the fixed winding device in the longitudinal direction and at a constant distance therefrom, that the laser is fixed next to and/or above the winding device, where the laser beam is directed directly or by means of at least one beam deflection means onto the region of the location at which the strip runs up onto the tube surface, that a first beam deflection means (14) is provided which is acted upon by the laser beam (13) and that a further beam deflection means (16) is provided which is acted upon by the reflected laser beam (13) of the first beam deflection means (14) and which directs the laser beam (13) at the desired angle (25) relative to the axis of rotation of the tube (R) to be wound in the region of the location at which the strip (B) runs up onto the tube surface.

13. A device as claimed in one of Claims 11 or 12, characterised in that a focussing means (17) is provided which focuses the laser beam (13) onto the region of the location at which the strip runs up onto the tube surface.

14. A device as claimed in Claim 13, characterised in that the focussing means (17) is arranged between the beam deflection means (14, 15, 16) and the location at which the strip (B) runs up onto the tube (R) to be wound.

15. A device as claimed in one of Claims 11 to 14, characterised in that both the diameter of the laser beam (13) and its angle of incidence (25) on the tube surface are adjustable.

16. A device as claimed in one of Claims 11 to 15, characterised in that the optical axis (28) of the laser beam (13) is adjustable relative to the run-up location of the strip (B) onto the tube surface.

17. A device as claimed in one of Claims 11 to 16, characterised in that the laser beam (13) is conveyed from the laser (12) in parallel to the longitudinal axis of the tube (R) to a beam deflection means (14) inclined relative to the longitudinal axis.

18. A device as claimed in Claim 17, characterised in that the axis of the laser (12) is aligned in parallel to the longitudinal axis of the tube (R).

19. A device as claimed in Claim 11, characterised in that the winding rollers (22, 23) comprise springs which pre-load the band-like side wall (21) in the winding direction.

20. A device as claimed in one of Claims 11 to 19 excluding Claim 12, characterised in that in the case of a lathe-like clamping- and drive device, the laser beam (13) is enclosed in a conduit guide means (24) on the carriage (6) between the beam deflection means (14) and the focussing means (17).

21. A device as claimed in Claim 12 or one of Claims 13 to 18 in association with Claim 13, characterised in that in the case of a fixed winding device the laser beam is enclosed in a conduit guide means between the laser and the tube.

22. A device as claimed in Claim 11 or one of Claims 19 to 21, characterised in that the fixed guide channel (18) and the conduit guide means (24) of the laser beam (13) are flushed with a protective gas under a slight excess pressure.

23. A device as claimed in one of Claims 11 to 22, characterised in that the laser beam (13) is produced by a CO₂ laser (12).

24. A device as claimed in one of Claims 11 to 23, characterised in that a ring-gap nozzle for a protective gas, which nozzle surrounds the laser beam (13), is arranged next to the location at which the strip (B) runs up onto the tube (R) which is to be wound.

25. A device as claimed in one of Claims 11 to 24, characterised in that the guides of the clamping- and drive device comprise an aligning- and braking device (10) which aligns the strip (B) with the desired pitch on the periphery of the tube (R) to be wound and which consists of two plane-parallel plates (31) which are spaced from one another approximately by the strip thickness and which laterally guide the strip (B), and that the guides comprise at least one guide disc set consisting of at least two guide discs (36, 37, 38) which are mounted on a guide pin (39) spaced from one another approximately by the strip thickness and which laterally guide the wound strip (B) and the guide pin (39) of which is aligned in accordance with the desired pitch.

## Revendications

1. Procédé de fabrication de tubes échangeurs de chaleur en métal avec des surfaces d'échange de chaleur augmentées par des nervures, dans lequel la bande constituant les nervures s'enroule en forme d'hélice sur le tube qui tourne sur sa surface extérieure, la bande étant amenée sous tension sur la surface du tube et son bord inférieur étant soudé sur le tube, procédé caractérisé en ce que la surface de contact s'étendant en forme d'hélice sur la surface du tube entre le tube et le bord inférieur de la bande est exclusivement fondue en surface par un rayon laser qui est dirigé dans la zone du point de contact de la bande sur la surface du tube et fond en surface une zone de la surface du tube qui correspond dans le sens axial du tube au moins à la largeur du bord inférieur de la bande et dans le sens périphérique du tube à peu près à ce montant, de telle sorte que,
- le bord inférieur de la bande alimentée est fondu par ce rayon laser exclusivement dans la zone du point de contact,
- les deux zones superficielles fondues en surface d'une part à la surface du tube et d'autre part sur le bord inférieur de la bande sont réunies sans jeu du fait de la torsion exercée sur la bande d'alimentation lors de l'arrivée de la bande sur le tube et lors du refroidissement consécutif sont reliées ensemble de telle façon que l'on ait un soudage continu exempt de fente résiduelle de la bande enroulée en forme d'hélice sur le tube,
- et le rayon laser est dirigé sous un angle aigu par rapport à l'axe de rotation du tube dans la zone du point de contact de la bande sur la surface du tube.

2. Procédé selon la revendication 1, caractérisé en ce que le rayon laser est dirigé sous un angle d'environ 15 à 25° par rapport à l'axe de rotation du tube dans la zone du point de contact sur la surface du tube.

3. Procédé selon la revendication 1 ou 2, caractérisé en ce que le rayon laser est dirigé dans la zone du point de contact de la bande directement dans l'ouverture d'une fente entre la bande et le tube ou directement sur la surface du tube à côté de l'ouverture de la fente.

4. Procédé selon l'une des revendications 1 à 3, caractérisé en ce que le rayon laser est polarisé linéairement et en ce que la composante p du rayon laser dans la zone du point de contact de la bande est dirigée tangentiellement à la surface du tube et perpendiculairement à l'axe de rotation du tube.

5. Procédé selon l'une des revendications 1 à 4, caractérisé en ce que le rayon laser est focalisé de telle façon qu'il s'étende axialement sur la surface du tube au moins sous tout le bord inférieur de la bande.

6. Procédé selon l'une des revendications 1 à 5, caractérisé en ce que le rayon laser est focalisé de telle sorte qu'au moins toute la largeur du bord inférieur de la bande soit embrassée par le rayon laser.

7. Procédé selon l'une des revendications 1 à 6, caractérisé en ce que le rayon laser est dirigé dans la zone du point de contact du tube avec son axe optique sur une ouverture de fente, qui est constituée entre la bande et le tube sur le côté de la bande situé en regard du rayon laser incident.

8. Procédé selon l'une des revendications 1 à 7, caractérisé en ce qu'on utilise le rayon laser d'un laser fonctionnant en mode annulaire TEM₀₁ pour le soudage de la bande et du tube.

9. Procédé selon l'une des revendications 1 à 8, caractérisé en ce que le rayon laser est guidé avant le soudage du tube et de la bande dans un gaz protecteur, en particulier dans de l'azote.

10. Procédé selon l'une des revendications 1 à 9, caractérisé en ce que la zone du point de contact de la bande est balayée lors du soudage par un gaz de protection, en particulier par de l'hélium ou de l'argon.

11. Dispositif pour la mise en oeuvre du procédé selon l'une des revendications 1 à 10, utilisant un dispositif de serrage et d'entraînement analogue à un tour pour le tube (R) sur lequel la bande doit être enroulée avec un chariot (6) entraîné par une vis-mère (7), chariot sur lequel sont disposés le rouleau d'alimentation de la bande (8) ainsi qu'un dispositif d'orientation et de freinage (10) et aussi des guidages (11) pour la bande, dispositif caractérisé en ce que :
- sur le chariot (6) est disposé au moins un système de déviation de rayon (14, 15, 16) pour le rayon laser (13) et
- le rayon laser (13) d'un laser (12), disposé à poste fixe à côté et/ou au-dessus du dispositif de serrage et d'entraînement est dirigé sur le système de déviation de rayon (14),
- le rayon laser (13) est guidé à partir du laser parallèlement à l'axe longitudinal du tube (R) à travers un canal de guidage (18) disposé à poste fixe à côté et/ou au-dessus du dispositif de serrage et d'entraînement analogue à un tour,
- le canal de guidage (18) a une paroi latérale en forme de bande (11) qui peut être enroulé aux eux extrémités sur les rouleaux à poste fixe d'enroulement (22, 23),
- la paroi latérale en forme de bande (21) est fixée sur le chariot, de telle sorte qu'elle se déroule lors de l'avancement du chariot (6) à partir d'un rouleau (22, 23) et s'enroule sur l'autre rouleau (23, 22),
- un système de déviation (14) de rayon monté sur le chariot vient en prise dans le canal de guidage et
- le rayon laser (13) est découplé par le système de déviation de rayon (14) à travers un orifice de sortie (20) de la paroi latérale en forme de bande (21) à partir du canal de guidage (18).

12. Dispositif pour la mise en oeuvre du procédé selon l'une des revendications 1 à 10, avec un dispositif de serrage et d'entraînement qui serre au moins du côté de l'extrémité le tube sur lequel on doit enrouler la bande et le fait tourner autour de son axe longitudinal et avec un dispositif d'enroulement à partir d'un rouleau d'alimentation de la bande ainsi qu'un dispositif d'orientation et de freinage et aussi avec des guidages pour la bande, dispositif caractérisé en ce que :
- le dispositif de serrage et d'entraînement passe devant le tube dans le sens longitudinal et à une distance constante du dispositif à poste fixe d'enroulement,
- le laser est disposé à poste fixe à côté et/ou au-dessus du dispositif d'enroulement, le rayon laser étant dirigé directement ou au moyen d'au moins un système de déviation de rayon sur la zone du point de contact de la bande sur la surface du tube,
- on prévoit un premier système de déviation de rayon (14) sollicité par le rayon laser (13) et
- on prévoit un autre système de déviation de rayon (16) sollicité par le rayon laser (13) réfléchi du premier système de déviation de rayon (14), système de déviation de rayon (16) qui dirige le rayon laser (13) sous l'angle voulu (15) par rapport à l'axe de rotation du tube (R) sur lequel on doit enrouler la bande (B) dans la zone du point de contact de celle-ci sur la surface du tube.

13. Dispositif selon l'une des revendications 11 ou 12, caractérisé en ce que l'on prévoit un système de focalisation (17) formant un faisceau du rayon laser (13) sur la zone du point de contact de la bande sur la surface du tube.

14. Dispositif selon la revendication 13, caractérisé en ce que l'on dispose le système de focalisation (17) entre le système de déviation du rayon (14, 15, 16) et le point de contact de la bande (B) sur le tube (R) devant recevoir l'enroulement.

15. Dispositif selon l'une des revendications 11 à 14, caractérisé en ce que l'on peut règler aussi bien le diamètre du rayon laser (13) que son angle d'incidence (25) sur la surface du tube.

16. Dispositif selon l'une des revendications 11 à 15, caractérisé en ce que l'on peut régler l'axe optique (28) du rayon laser (13) par rapport au point de contact de la bande (B) sur la surface du tube.

17. Dispositif selon l'une des revendications 11 à 16, caractérisé en ce que l'on dirige le rayon laser (13) depuis le laser (12) parallèlement à l'axe longitudinal du tube (R) sur un système de déviation de rayon (14) incliné par rapport à l'axe longitudinal.

18. Dispositif selon la revendication 17, caractérisé en ce que l'axe du laser (12) est dirigé parallèlement à l'axe longitudinal du tube (R).

19. Dispositif selon la revendication 11, caractérisé en ce que les rouleaux d'enroulement (22, 23) ont des ressorts qui mettent en précontrainte la paroi latérale (21) en forme de bande dans le sens de l'enroulement.

20. Dispositif selon l'une des revendications 11 à 19 à l'exception de la revendication 12, caractérisé en ce que le rayon laser (13) est encapsulé, dans le cas d'un dispositif de serrage et d'entraînement analogue à un tour, sur le chariot (6) entre le dispositif de déviation de rayon (14) et le système de focalisation (17) dans un guidage tubulaire (24).

21. Dispositif selon la revendication 12 ou d'une des revendications 12 à 13 en liaison avec la revendication 13, caractérisé en ce que le rayon laser est encapsulé, dans le cas d'un dispositif d'enroulement à poste fixe, entre le laser et le tube dans un guidage tubulaire.

22. Dispositif selon la revendication 11 ou l'une des revendications 19 à 21, caractérisé en ce que le canal de guidage à poste fixe (18) ou le guidage tubulaire (24) du rayon laser (13) est balayé sous une légère surpression par un gaz de protection.

23. Dispositif selon l'une des revendications 11 à 22, caractérisé en ce que le rayon laser (13) est produit par un laser à CO₂ (12).

24. Dispositif selon l'une des revendications 11 à 23, caractérisé en ce que l'on dispose une buse annulaire de fente, pour un gaz de protection, entourant le rayon laser (13) à côté du point de contact de la bande (B) sur le tube (R) devant recevoir l'enroulement.

25. Dispositif selon l'une des revendications 11 à 24, caractérisé en ce que les guidages du dispositif de serrage et d'entraînement ont un dispositif d'orientation et de freinage (10) qui guide la bande (B) sur le pourtour du tube (R) devant recevoir l'enroulement avec le pas voulu, dispositif qui consiste en deux plaques (31) dont les plans sont parallèles, qui guident latéralement la bande (B), en étant écartées l'une de l'autre d'une distance à peu près égale à l'épaisseur de la bande et en ce que les guidages ont au moins un jeu de disques de guidage se composant d'au moins deux disques de guidage (36, 37, 38) montés, à une distance l'un de l'autre correspondant à peu près à l'épaisseur de la bande sur un pivot de guidage (39), disques qui guident latéralement la bande à enrouler (B) et dont le pivot de guidage (39) est orienté en fonction du pas désiré.
